# FASCICULE DE BREVET EUROPEEN

(11) **EP 3 112 953 B1**
(45) Date de publication et mention de la délivrance du brevet: **24.01.2018**
(21) Numéro de dépôt: 16170641.1
(22) Date de dépôt: 20.05.2016
(51) Int. Cl.: G04B 17/34, B23K 37/053, B23K 37/04, B23K 26/00, G04B 13/02

(54) **COMPOSANT HORLOGER AVEC UNE PIÈCE À SURFACE DE SOUDAGE DÉCOUPLÉE**
UHRKOMPONENTE MIT EINEM BAUTEIL MIT ENTKOPPELTER SCHWEISSOBERFLÄCHE
TIMEPIECE COMPONENT HAVING A PART WITH A DECOUPLED WELDING SURFACE

(30) Priorité: 16.06.2015 EP 15172336
(43) Date de publication de la demande: 04.01.2017
(73) Titulaire: Nivarox-FAR S.A., 2400 Le Locle (CH)
(72) Inventeur: Cusin, Pierre, 1423 Villars-Burquin (CH); Cretenet, Davy, 25650 La Chaux-de-Gilley (FR); Stranczl, Marc, 1260 Nyon (CH); Garret, Raphaël, 2300 La Chaux de Fonds (CH)
(74) Mandataire: Goulette, Ludivine

(56) Documents cités:
- EP-A1- 2 317 406
- US-A1- 2015 023 140
- US-B1- 6 528 931

## Description

### Domaine de l'invention

L'invention se rapporte à une pièce à surface de soudage améliorée et, plus précisément, une telle pièce permettant une adaptation de sa surface pour un soudage amélioré.

### Arrière-plan de l'invention

Il est connu du document WO 2015/185423 de former un composant horloger à partir d'une pièce comportant un matériau à base de silicium ou de céramique qui est directement soudé par rayonnement électromagnétique sur une autre pièce comme, par exemple, un métal ou un alliage métallique.

Dans le cadre de ce développement, il est apparu important que l'interstice entre les pièces ne doive pas excéder 0,5 micromètre sous peine que celles-ci ne puissent pas être soudées.

### Résumé de l'invention

Le but de la présente invention est de pallier tout ou partie les inconvénients cités précédemment en proposant un composant horloger comportant une nouvelle pièce avec au moins une surface de contact autorisant une adaptation géométrique garantissant son assemblage avec un autre organe par soudage.

A cet effet, l'invention se rapporte à un composant horloger comportant une pièce monobloc soudée sur un organe muni d'une surface sensiblement horizontale et d'une surface sensiblement verticale caractérisé en ce que la pièce comporte des moyens élastiques d'attache sur ladite surface sensiblement verticale et en ce que la pièce comporte en outre des moyens de fixation agencés pour être soudés sur ladite surface sensiblement horizontale permettant de découpler l'attache des moyens élastiques de ceux de fixation pour garantir le soudage du composant horloger.

Avantageusement selon l'invention, le composant horloger comporte une pièce comprenant des moyens élastiques d'attache autorisant le centrage par rapport à un organe qui sont dissociés de moyens de fixation destinés à être soudés sur l'organe qui s'adaptent à la géométrie de l'organe pour diminuer ledit interstice en dessous de 0,5 micromètre et, incidemment, garantir le soudage du composant horloger.

Conformément à d'autres variantes avantageuses de l'invention :
- la pièce comporte une lame s'étendant selon une courbe fermée, l'espace délimité par la courbe fermée recevant l'organe ;
- les moyens élastiques sont formés par ladite lame dont la courbe fermée offre des zones de déformation élastique entrant en contact avec ladite surface sensiblement verticale afin d'attacher la pièce ;
- les moyens élastiques sont formés par des poutres monoblocs avec ladite lame s'étendant dans ledit espace délimité par la courbe fermée et offrant des zones de déformation élastique entrant en contact avec ladite surface sensiblement verticale afin d'attacher la pièce ;
- les moyens de fixation sont formés par ladite lame dont la courbe fermée offre des parties à déformation élastique entrant en contact uniquement avec ladite surface sensiblement horizontale afin de s'adapter à sa géométrie pour garantir son soudage ;
- les moyens de fixation sont formés par des jambes monoblocs avec ladite lame s'étendant dans ledit espace délimité par la courbe fermée et offrant des parties à déformation élastique entrant en contact uniquement avec ladite surface sensiblement horizontale afin de s'adapter à sa géométrie pour garantir son soudage ;
- les moyens de fixation sont formés par des jambes monoblocs avec ladite lame s'étendant en dehors dudit espace délimité par la courbe fermée et offrant des parties à déformation élastique entrant en contact uniquement avec ladite surface sensiblement horizontale afin de s'adapter à sa géométrie pour garantir son soudage ;
- la pièce est à base de silicium ou à base de céramique ;
- la pièce comporte en outre au moins un revêtement partiel de métal, d'oxyde de silicium, de nitrure de silicium, de carbure de silicium ou d'un allotrope du carbone ;
- l'organe comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

De plus, l'invention se rapporte à une pièce d'horlogerie caractérisée en ce qu'elle comporte au moins un composant horloger selon l'une des variantes précédentes.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue en perspective d'un résonateur balancier - spiral ;
- la figure 2 est une représentation en perspective d'un spiral selon l'invention ;
- la figure 3 est une représentation en perspective d'un arbre de balancier selon l'invention ;
- la figure 4 est une représentation en coupe d'un assemblage selon le document WO 2015/185423 ;
- les figures 5 et 6 sont des représentations d'un premier mode de réalisation de composant horloger selon l'invention ;
- les figures 7 et 8 sont des représentations d'un deuxième mode de réalisation de composant horloger selon l'invention ;
- les figures 9 et 10 sont des représentations d'un troisième mode de réalisation de composant horloger selon l'invention ;
- les figures 11 et 12 sont des représentations d'un quatrième mode de réalisation de composant horloger selon l'invention ;
- les figures 13 et 14 sont des représentations d'un cinquième mode de réalisation de composant horloger selon l'invention.

### Description détaillée des modes de réalisation préférés

L'invention se rapporte à un composant horloger formé à l'aide d'une pièce dont le matériau ne comporte pas de domaine plastique utilisable, c'est-à-dire avec un domaine plastique très restreint, avec une autre pièce comportant le même type de matériau ou un autre type de matériau.

Ce composant a été imaginé pour des applications dans le domaine horloger et est rendu nécessaire par la part croissante que tiennent les matériaux fragiles comme ceux à base de silicium ou de céramique. On peut, à titre d'exemple, envisager de former un boîtier, un cadran, un réhaut, une glace, une lunette, un poussoir, une couronne, un fond de boîtier, une aiguille, un bracelet, un spiral, un balancier, une ancre, un pont, une masse oscillante ou même un mobile comme une roue d'échappement totalement ou partiellement à base de matériaux fragiles.

Préférentiellement, le matériau à base de silicium utilisé pour la réalisation du spiral compensateur peut être du silicium monocristallin quelle que soit son orientation cristalline, du silicium monocristallin dopé quelle que soit son orientation cristalline, du silicium amorphe, du silicium poreux, du silicium polycristallin, du nitrure de silicium, du carbure de silicium, du quartz quelle que soit son orientation cristalline ou de l'oxyde de silicium. Bien entendu d'autres matériaux peuvent être envisagés comme un verre, une céramique, un cermet, un métal ou un alliage métallique. De plus, la première pièce à base de silicium peut en outre comporter optionnellement au moins un revêtement partiel d'oxyde de silicium, de nitrure de silicium, de carbure de silicium ou d'un allotrope du carbone suivant les applications prévues du composant horloger.

Comme expliqué ci-dessus, l'autre pièce peut comporter le même type de matériau ou un autre type de matériau. Ainsi, préférentiellement, l'autre pièce est à base de métal et peut comporter un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

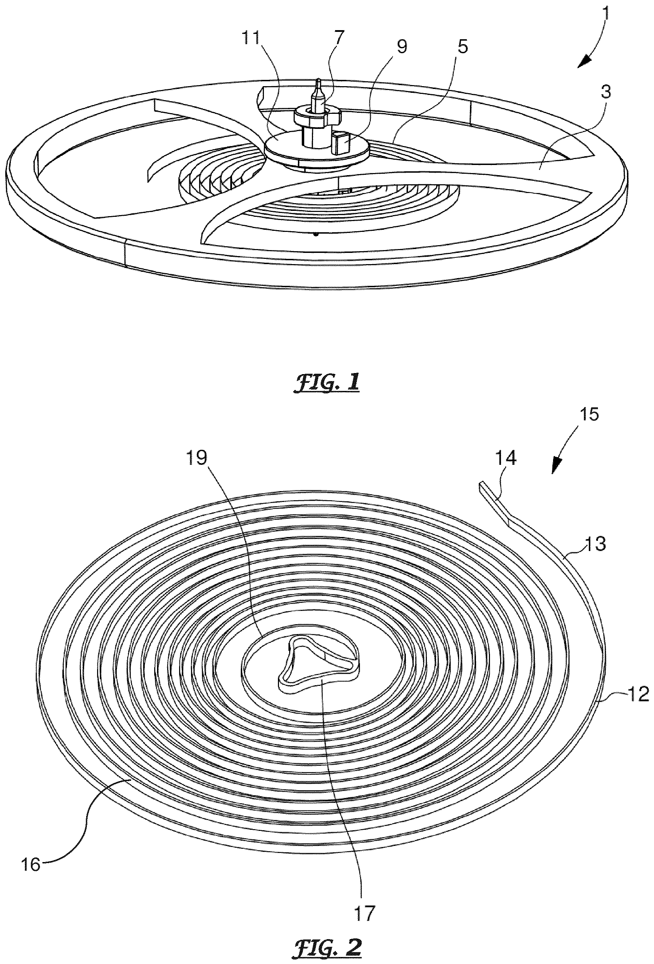

Par simplification, l'explication ci-dessous sera portée sur un assemblage entre un spiral et un arbre de balancier. A la figure 1, on peut voir un résonateur 1 dans lequel le spiral 5 est utilisé pour compenser thermiquement l'ensemble du résonateur 1, c'est-à-dire toutes les parties et notamment le balancier 3 monté sur le même arbre 7 de balancier. Le résonateur 1 coopère avec un système d'entretien comme, par exemple, un échappement à ancre suisse (non représenté) coopérant avec la cheville 9 du plateau 11 également monté sur l'arbre 7.

Un spiral compensateur 15 est mieux visible à la figure 2. Il comporte une lame unique 16 s'enroulant sur elle-même entre une spire interne 19 venue de forme avec une virole 17 et une spire externe 12 comportant une extrémité 14 destinée à être pitonnée. Comme visible à la figure 2, afin d'améliorer l'isochronisme du résonateur dans lequel est utilisé le spiral 15, ce dernier comporte une spire interne 19 comprenant une courbe du type Grossmann et une spire externe 12 comprenant une portion épaissie 13 par rapport au reste du spiral 15. Enfin, on peut voir que la virole 17 comporte une bande unique s'étendant selon une forme sensiblement triangulaire afin que la virole montre un caractère élastique lorsqu'elle est ajustée sur l'arbre notamment pour autoriser son centrage par rapport à ce dernier.

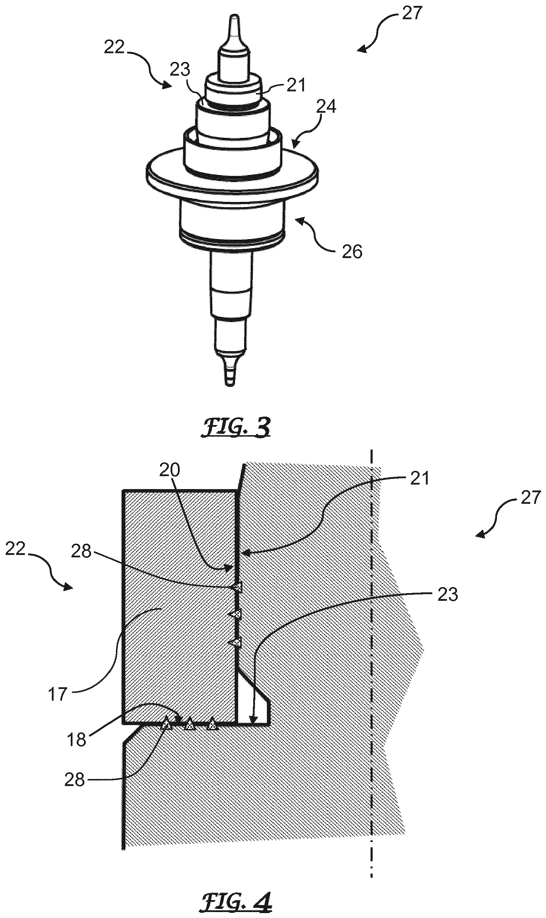

Un arbre 27 est mieux visible à la figure 3. Il comporte notamment plusieurs diamètres 22, 24, 26 destinés à recevoir respectivement le spiral, le balancier et le plateau. Comme illustré à la figure 3, le diamètre 22 comporte une tige 21 cylindrique bordée dans sa partie inférieure par une portée 23.

Comme illustré à la figure 4, le diamètre 22 est destiné à recevoir, entre la tige 21 et la portée 23, la virole 17 du spiral 15. Plus précisément, la face intérieure 20 de la virole 17 est plaquée élastiquement contre la surface externe de la tige 21 et la face inférieure 18 de la virole 17 est plaquée contre la portée 23. Enfin, comme visible sous la référence 28, la tige 21 et/ou la portée 23 est soudée à la virole 17 comme enseigné dans le document WO 2015/185423.

Toutefois, dans le cadre du développement de l'enseignement du document WO 2015/185423, il est rapidement ressorti que l'interstice entre les pièces ne doive pas excéder 0,5 micromètre sous peine que celles-ci ne puissent pas être soudées.

Selon les modes de réalisation de l'invention décrits ci-dessous, le composant horloger comporte une pièce comprenant des moyens d'attache autorisant le centrage par rapport à un organe qui sont dissociés de moyens de fixation destinés à être soudés sur l'organe qui, avantageusement selon l'invention, s'adaptent à la géométrie de l'organe pour diminuer ledit interstice en dessous de 0,5 micromètre et, incidemment, garantir le soudage du composant horloger.

Avantageusement selon l'invention, la pièce 35, 45, 55, 65, 75 comporte des moyens élastiques 30, 40, 50, 60, 70 d'attache sur ladite surface sensiblement verticale formant une tige 21 et des moyens de fixation 36, 46, 56, 66, 76 agencés pour être soudés sur ladite surface sensiblement horizontale formant une portée 23. On comprend donc que la pièce 35, 45, 55, 65, 75 formant un spiral autorise le découplage entre, d'une part, l'attache des moyens élastiques 30, 40, 50, 60, 70 permettant notamment le centrage sur la tige 21 et, d'autre part, les moyens de fixation 36, 46, 56, 66, 76 qui sont utilisés pour garantir le soudage du composant entre la zone inférieure 32, 42, 52, 62, 72 des moyens de fixation 36, 46, 56, 66, 76 et la portée 23 de l'arbre 27.

En outre, la pièce formant le spiral 35, 45, 55, 65, 75 comporte une lame 37, 47, 57, 67, 77 s'étendant selon une courbe fermée 33, 43, 53, 63, 73, l'espace délimité par la courbe fermée 33, 43, 53, 63, 73 formant une virole recevant l'organe formé par l'arbre 27.

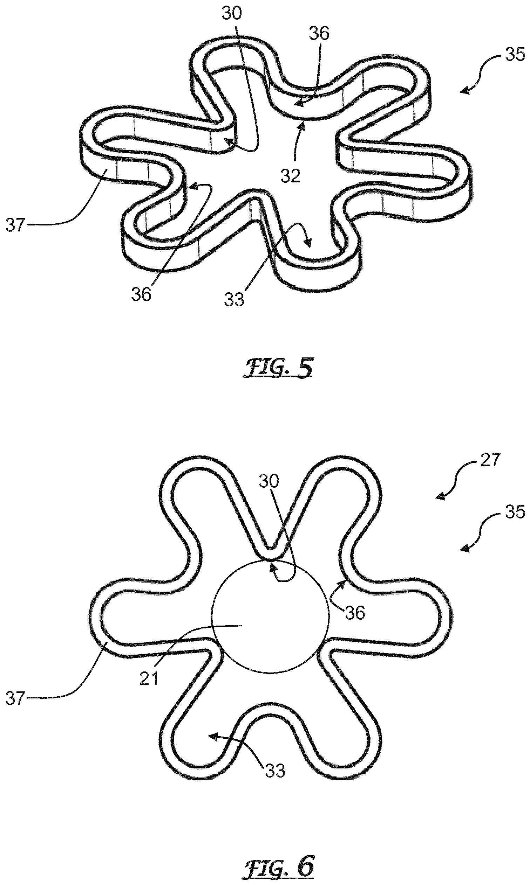

Selon un premier mode de réalisation illustrés aux figures 5 et 6, l'invention se rapporte à un composant comportant une pièce monobloc formant un spiral 35 soudée sur un organe formant un arbre 27 muni d'une surface sensiblement horizontale formant une portée 23 et d'une surface sensiblement verticale formant une tige 21.

Avantageusement selon le premier mode de réalisation, on peut voir aux figures 5 et 6 que les moyens élastiques 30 sont formés par la lame 37 dont la courbe fermée 33 forme sensiblement une étoile et offre des zones de déformation élastique entrant en contact avec ladite surface sensiblement verticale formant une tige 21 afin d'attacher la pièce formant le spiral 35.

De plus, les moyens de fixation 36 sont formés par ladite lame dont la courbe fermée 33 offre des parties à déformation élastique dont chaque surface inférieure 32 est destinée à entrer en contact uniquement avec ladite surface sensiblement horizontale formant une portée 23 afin de s'adapter à sa géométrie pour garantir son soudage.

On comprend donc que la face inférieure 32 est capable de se déformer pour compenser un éventuel défaut de planéité de la portée 23, c'est-à-dire que la face inférieure 32 peut suivre la géométrie de la portée 23 avec plus de degré de liberté, afin de diminuer l'interstice à une valeur inférieure ou égale à 0,5 micromètre.

Ainsi, après l'ajustage de la pièce formant le spiral 35 sur le diamètre 22 de l'arbre 27, le soudage par laser est garanti car les parties à déformation élastique des moyens de fixation 36 permettent de diminuer l'interstice avec l'organe 27 à une valeur inférieure ou égale à 0,5 micromètre.

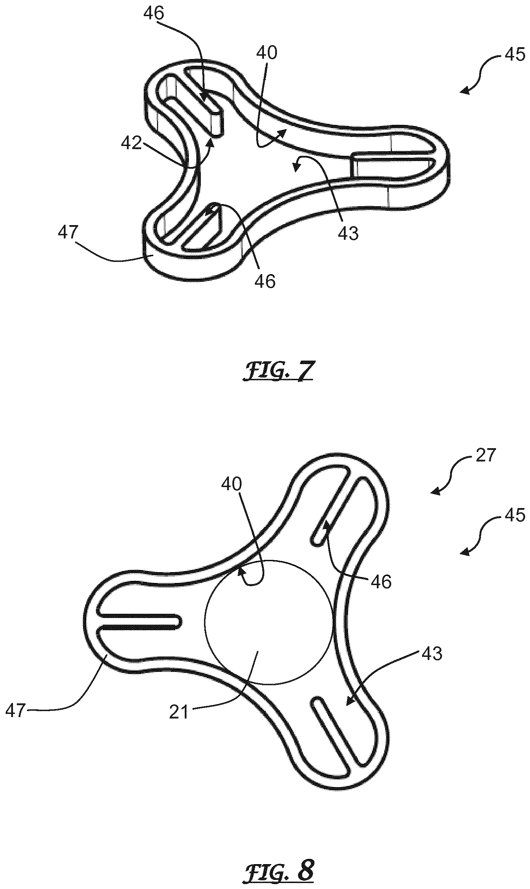

Avantageusement selon un deuxième mode de réalisation, on peut voir aux figures 7 et 8 que les moyens élastiques 40 sont formés par la lame 47 dont la courbe fermée 43 forme sensiblement un trèfle à trois lobes et offre des zones de déformation élastique entrant en contact avec ladite surface sensiblement verticale formant une tige 21 afin d'attacher la pièce formant le spiral 45.

De plus, les moyens de fixation 46 sont formés par des jambes monoblocs avec la lame 47, s'étendant dans l'espace délimité par la courbe fermée 43 et offrant des parties à déformation élastique dont chaque surface inférieure 42 est destinée à entrer en contact uniquement avec la surface sensiblement horizontale formant la portée 23 afin de s'adapter à sa géométrie pour garantir son soudage.

On comprend donc que la face inférieure 42 est capable de se déformer pour compenser un éventuel défaut de planéité de la portée 23, c'est-à-dire que la face inférieure 42 peut suivre la géométrie de la portée 23 avec plus de degrés de liberté, afin de diminuer l'interstice à une valeur inférieure ou égale à 0,5 micromètre.

Ainsi, après l'ajustage de la pièce formant le spiral 45 sur le diamètre 22 de l'arbre 27, le soudage par laser est garanti car les parties à déformation élastique des moyens de fixation 46 permettent de diminuer l'interstice avec l'organe 27 à une valeur inférieure ou égale à 0,5 micromètre.

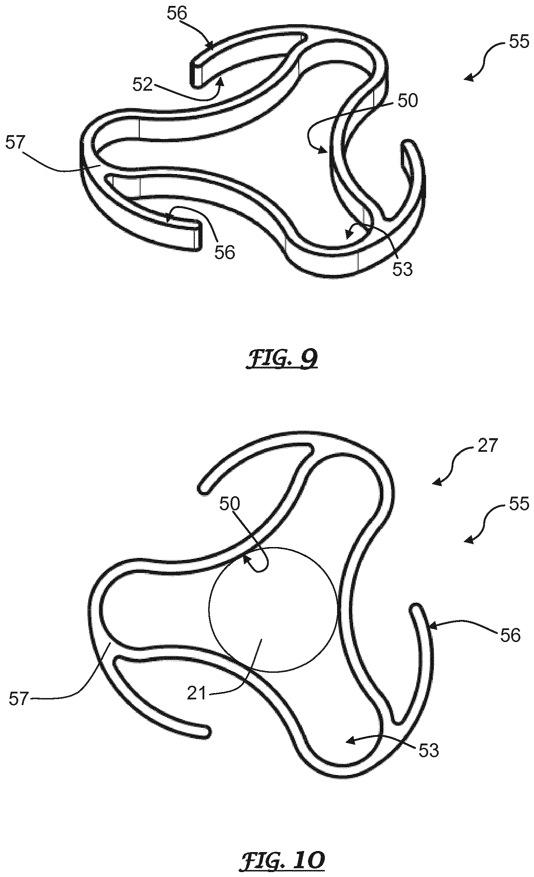

Avantageusement selon un troisième mode de réalisation, on peut voir aux figures 9 et 10 que les moyens élastiques 50 sont formés par la lame 57 dont la courbe fermée 53 forme sensiblement un trèfle à trois lobes et offre des zones de déformation élastique entrant en contact avec ladite surface sensiblement verticale formant une tige 21 afin d'attacher la pièce formant le spiral 55.

De plus, les moyens de fixation 56 sont formés par des jambes monoblocs avec la lame 57, s'étendant en dehors de l'espace délimité par la courbe fermée 53 et offrant des parties à déformation élastique dont chaque surface inférieure 52 est destinée à entrer en contact uniquement avec ladite surface sensiblement horizontale formant la portée 23 afin de s'adapter à sa géométrie pour garantir son soudage.

On comprend donc que la face inférieure 52 est capable de se déformer pour compenser un éventuel défaut de planéité de la portée 23, c'est-à-dire que la face inférieure 52 peut suivre la géométrie de la portée 23 avec plus de degré de liberté, afin de diminuer l'interstice à une valeur inférieure ou égale à 0,5 micromètre.

Ainsi, après l'ajustage de la pièce formant le spiral 55 sur le diamètre 22 de l'arbre 27, le soudage par laser est garanti car les parties à déformation élastique des moyens de fixation 56 permettent de diminuer l'interstice avec l'organe 27 à une valeur inférieure ou égale à 0,5 micromètre.

Selon une variante de ce mode de réalisation des figures 9 et 10, les jambes formant des parties à déformation élastique des moyens de fixation 56 pourraient être doublées, c'est-à-dire être formées de chaque côté du sommet de la courbure fermée 53 de la lame 57 et non que d'un seul côté comme dans l'exemple des figures 9 et 10.

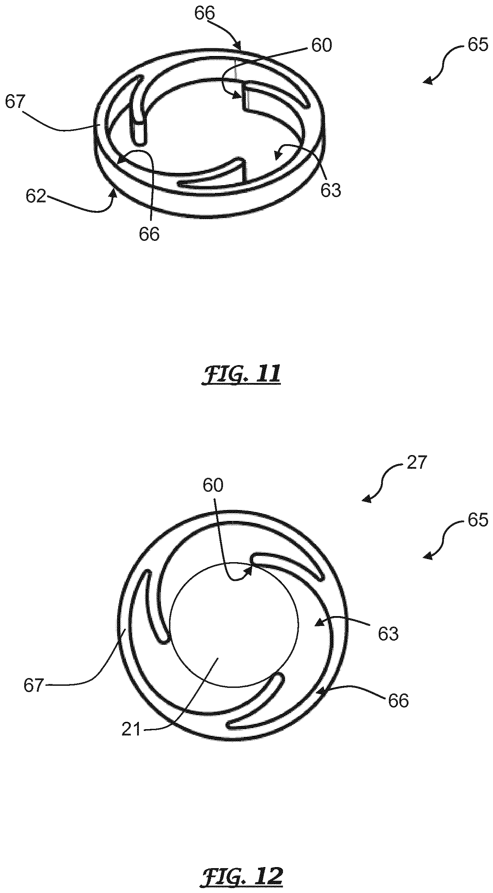

Avantageusement selon un quatrième mode de réalisation, on peut voir aux figures 11 et 12 que les moyens élastiques 60 sont formés par des poutres monoblocs avec la lame 67 s'étendant dans l'espace délimité par la courbe fermée 63 et offrant des zones de déformation élastique entrant en contact avec ladite surface sensiblement verticale formant la tige 21 afin d'attacher la pièce formant le spiral 65.

De plus, les moyens de fixation 66 sont formés par la lame 67 dont la courbe fermée 63 forme sensiblement un anneau et offre des parties à déformation élastique entrant en contact uniquement avec ladite surface sensiblement horizontale formant la portée 23 afin de s'adapter à sa géométrie pour garantir son soudage.

On comprend donc que la face inférieure 62 est capable de compenser un éventuel défaut de planéité de la portée 23, c'est-à-dire que la face inférieure 62 peut suivre la géométrie de la portée 23 avec plus de degré de liberté, afin de diminuer l'interstice à une valeur inférieure ou égale à 0,5 micromètre.

Ainsi, après l'ajustage de la pièce formant le spiral 65 sur le diamètre 22 de l'arbre 27, le soudage par laser est garanti car la géométrie de la pièce 65 permet de diminuer l'interstice avec l'organe 27 à une valeur inférieure ou égale à 0,5 micromètre.

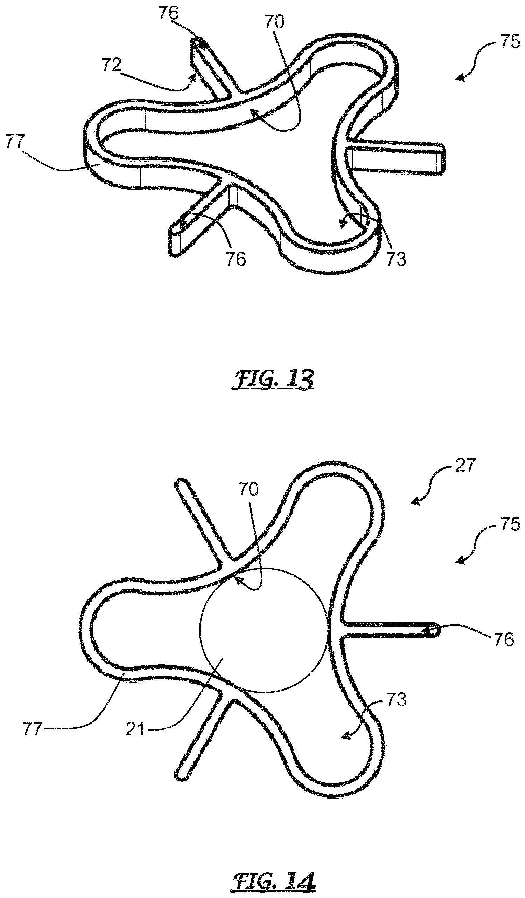

Avantageusement selon un cinquième mode de réalisation, on peut voir aux figures 13 et 14 que les moyens élastiques 70 sont formés par la lame 77 dont la courbe fermée 73 forme sensiblement un trèfle à trois lobes et offre des zones de déformation élastique entrant en contact avec ladite surface sensiblement verticale formant une tige 21 afin d'attacher la pièce formant le spiral 75.

De plus, les moyens de fixation 76 sont formés par des jambes monoblocs avec la lame 77, s'étendant en dehors de l'espace délimité par la courbe fermée 73 et offrant des parties à déformation élastique dont chaque surface inférieure 72 est destinée à entrer en contact uniquement avec ladite surface sensiblement horizontale formant la portée 23 afin de s'adapter à sa géométrie pour garantir son soudage.

On comprend donc que la face inférieure 72 est capable de se déformer pour compenser un éventuel défaut de planéité de la portée 23, c'est-à-dire que la face inférieure 72 peut suivre la géométrie de la portée 23 avec plus de degré de liberté, afin de diminuer l'interstice à une valeur inférieure ou égale à 0,5 micromètre.

Ainsi, après l'ajustage de la pièce formant le spiral 75 sur le diamètre 22 de l'arbre 27, le soudage par laser est garanti car les parties à déformation élastique des moyens de fixation 76 permettent de diminuer l'interstice avec l'organe 27 à une valeur inférieure ou égale à 0,5 micromètre.

Bien entendu, la présente invention ne se limite pas à l'exemple illustré mais est susceptible de diverses variantes et modifications qui apparaîtront à l'homme de l'art. En particulier, la pièce ne saurait se limiter aux modes de réalisation présentés dans la présente description. En effet, suivant les applications souhaitées, elle pourrait être de géométrie différente pour obtenir des surfaces différentes.

## Revendications

1. Composant horloger comportant une pièce monobloc (15, 35, 45, 55, 65, 75) soudée sur un organe (27) muni d'une surface (21) sensiblement horizontale et d'une surface (23) sensiblement verticale **caractérisé en ce que** la pièce (15, 35, 45, 55, 65, 75) comporte des moyens élastiques (30, 40, 50, 60, 70) d'attache sur ladite surface sensiblement verticale et **en ce que** la pièce comporte en outre des moyens de fixation (36, 46, 56, 66, 76) agencés pour être soudés sur ladite surface sensiblement horizontale permettant de découpler l'attache des moyens élastiques (30, 40, 50, 60, 70) de ceux de fixation (36, 46, 56, 66, 76) pour garantir le soudage du composant horloger.

2. Composant horloger selon la revendication précédente, **caractérisé en ce que** la pièce (15, 35, 45, 55, 65, 75) comporte une lame (37, 47, 57, 67, 77) s'étendant selon une courbe fermée (33, 43, 53, 63, 73), l'espace délimité par la courbe fermée (33, 43, 53, 63, 73) recevant l'organe (27).

3. Composant horloger selon la revendication précédente, **caractérisé en ce que** les moyens élastiques (30, 40, 50, 60, 70) sont formés par la lame (37, 47, 57, 67, 77) dont la courbe fermée (33, 43, 53, 63, 73) offre des zones de déformation élastique entrant en contact avec ladite surface sensiblement verticale afin d'attacher la pièce (15, 35, 45, 55, 65, 75) à l'organe (27).

4. Composant horloger selon la revendication 2, **caractérisé en ce que** les moyens élastiques (30, 40, 50, 60, 70) sont formés par des poutres monoblocs avec la lame (37, 47, 57, 67, 77), s'étendant dans ledit espace délimité par la courbe fermée (33, 43, 53, 63, 73) et offrant des zones de déformation élastique entrant en contact avec ladite surface sensiblement verticale afin d'attacher la pièce(15, 35, 45, 55, 65, 75) à l'organe (27).

5. Composant horloger selon l'une des revendications 2 à 4, **caractérisé en ce que** les moyens de fixation (36, 46, 56, 66, 76) sont formés par la lame (37, 47, 57, 67, 77) dont la courbe fermée (33, 43, 53, 63, 73) offre des parties à déformation élastique entrant en contact uniquement avec ladite surface sensiblement horizontale afin de s'adapter à sa géométrie pour garantir son soudage.

6. Composant horloger selon l'une des revendications 2 à 4, **caractérisé en ce que** les moyens de fixation (36, 46, 56, 66, 76) sont formés par des jambes monoblocs avec la lame (37, 47, 57, 67, 77) s'étendant dans ledit espace délimité par la courbe fermée (33, 43, 53, 63, 73) et offrant des parties à déformation élastique entrant en contact uniquement avec ladite surface sensiblement horizontale afin de s'adapter à sa géométrie pour garantir son soudage.

7. Composant horloger selon l'une des revendications 2 à 4, **caractérisé en ce que** les moyens de fixation (36, 46, 56, 66, 76) sont formés par des jambes monoblocs avec la lame (37, 47, 57, 67, 77) s'étendant en dehors dudit espace délimité par la courbe fermée (33, 43, 53, 63, 73) et offrant des parties à déformation élastique entrant en contact uniquement avec ladite surface sensiblement horizontale afin de s'adapter à sa géométrie pour garantir son soudage.

8. Composant horloger selon l'une des revendications précédentes, **caractérisé en ce que** la pièce (15, 35, 45, 55, 65, 75) est à base de silicium ou à base de céramique.

9. Composant horloger selon la revendication précédente, **caractérisé en ce que** la pièce (15, 35, 45, 55, 65, 75) comporte en outre au moins un revêtement partiel de métal, d'oxyde de silicium, de nitrure de silicium, de carbure de silicium ou d'un allotrope du carbone.

10. Composant horloger selon l'une des revendications précédentes, **caractérisé en ce que** l'organe (27) comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

11. Pièce d'horlogerie **caractérisée en ce qu'**elle comporte au moins un composant horloger selon l'une des revendications précédentes.

## Patentansprüche

1. Uhrenkomponente, umfassend ein an ein Organ (27) geschweißtes Monoblockteil (15, 35, 45, 55, 65, 75), das mit einer im Wesentlichen horizontalen Oberfläche (21) und einer im Wesentlichen vertikalen Oberfläche (23) versehen ist, **dadurch gekennzeichnet, dass** das Teil (15, 35, 45, 55, 65, 75) elastische Mittel (30, 40, 50, 60, 70) für die Befestigung an der im Wesentlichen vertikalen Oberfläche umfasst und dass das Teil ferner Fixierungsmittel (36, 46, 56, 66, 76) umfasst, die dafür ausgelegt sind, an die im Wesentlichen horizontale Oberfläche geschweißt zu werden, was ermöglicht, die Befestigung der elastischen Mittel (30, 40, 50, 60, 70) von den Fixierungsmitteln (36, 46, 56, 66, 76) zu lösen, um das Verschweißen der Uhrenkomponente zu gewährleisten.

2. Uhrenkomponente nach dem vorhergehenden Anspruch, **dadurch gekennzeichnet, dass** das Teil (15, 35, 45, 55, 65, 75) ein Plättchen (37, 47, 57, 67, 77) umfasst, das sich entlang einer geschlossenen Kurve (33, 43, 53, 63, 73) erstreckt, wobei der durch die geschlossene Kurve (33, 43, 53, 63, 73) begrenzte Raum das Organ (27) aufnimmt.

3. Uhrenkomponente nach dem vorhergehenden Anspruch, **dadurch gekennzeichnet, dass** die elastischen Mittel (30, 40, 50, 60, 70) durch das Plättchen (37, 47, 57, 67, 77) gebildet sind, dessen geschlossene Kurve (33, 43, 53, 63, 73) Bereiche mit elastischer Verformung bietet, die mit der im Wesentlichen vertikalen Oberfläche in Kontakt gelangen, um das Teil (15, 35, 45, 55, 65, 75) an dem Organ (27) zu befestigen.

4. Uhrenkomponente nach Anspruch 2, **dadurch gekennzeichnet, dass** die elastischen Mittel (30, 40, 50, 60, 70) gebildet sind durch mit dem Plättchen (37, 47, 57, 67, 77) einteilige Träger, die sich in den durch die geschlossene Kurve (33, 43, 53, 63, 73) begrenzten Raum erstrecken und Bereiche mit elastischer Verformung bieten, die mit der im Wesentlichen vertikalen Oberfläche in Kontakt gelangen, um das Teil (15, 35, 45, 55, 65, 75) an dem Organ (27) zu befestigen.

5. Uhrenkomponente nach einem der Ansprüche 2 bis 4, **dadurch gekennzeichnet, dass** die Fixierungsmittel (36, 46, 56, 66, 76) durch das Plättchen (37, 47, 57, 67, 77) gebildet sind, dessen geschlossene Kurve (33, 43, 53, 63, 73) Teile mit elastischer Verformung bietet, die ausschließlich mit der im Wesentlichen horizontalen Oberfläche in Kontakt gelangen, um sich an deren Geometrie anzupassen, um ihre Verschweißung zu gewährleisten.

6. Uhrenkomponente nach einem der Ansprüche 2 bis 4, **dadurch gekennzeichnet, dass** die Fixierungsmittel (36, 46, 56, 66, 76) gebildet sind durch mit dem Plättchen (37, 47, 57, 67, 77) einteilige Schenkel, die sich in den durch die geschlossene Kurve (33, 43, 53, 63, 73) begrenzten Raum erstrecken und Teile mit elastischer Verformung bieten, die ausschließlich mit der im Wesentlichen horizontalen Oberfläche in Kontakt gelangen, um sich an deren Geometrie anzupassen, um ihre Verschweißung zu gewährleisten.

7. Uhrenkomponente nach einem der Ansprüche 2 bis 4, **dadurch gekennzeichnet, dass** die Fixierungsmittel (36, 46, 56, 66, 76) gebildet sind durch mit dem Plättchen (37, 47, 57, 67, 77) einteilige Schenkel, die sich außerhalb des durch die geschlossene Kurve (33, 43, 53, 63, 73) begrenzten Raums erstrecken und Teile mit elastischer Verformung bieten, die ausschließlich mit der im Wesentlichen horizontalen Oberfläche in Kontakt gelangen, um sich an deren Geometrie anzupassen, um ihre Verschweißung zu gewährleisten.

8. Uhrenkomponente nach einem der vorhergehenden Ansprüche, **dadurch gekennzeichnet, dass** das Teil (15, 35, 45, 55, 65, 75) auf Siliciumbasis oder auf Keramikbasis hergestellt ist.

9. Uhrenkomponente nach dem vorhergehenden Anspruch, **dadurch gekennzeichnet, dass** das Teil (15, 35, 45, 55, 65, 75) ferner zumindest eine Teilbeschichtung aus Metall, Siliciumoxid, Siliciumnitrid, Siliciumcarbid oder einem Kohlenstoffallotrop umfasst.

10. Uhrenkomponente nach einem der vorhergehenden Ansprüche, **dadurch gekennzeichnet, dass** das Organ (27) eine Eisenlegierung, eine Kupferlegierung, Nickel oder eine seiner Legierungen, Titan oder eine seiner Legierungen, Gold oder eine seiner Legierungen, Silber oder eine seiner Legierungen, Platin oder eine seiner Legierungen, Ruthenium oder eine seiner Legierungen, Rhodium oder eine seiner Legierungen oder Palladium oder eine seiner Legierungen enthält.

11. Zeitmessgerät, **dadurch gekennzeichnet, dass** es mindestens eine Uhrenkomponente nach einem der vorhergehenden Ansprüche umfasst.

## Claims

1. Timepiece component comprising a one-piece part (15, 35, 45, 55, 65, 75) welded on a member (27) provided with a substantially horizontal surface (21) and a substantially vertical surface (23), **characterized in that** the part (15, 35, 45, 55, 65, 75) includes elastic means (30, 40, 50, 60, 70) of attachment to said substantially vertical surface and **in that** the part further includes securing means (36, 46, 56, 66, 76) arranged to be welded on said substantially horizontal surface enabling the attachment of the elastic means (30, 40, 50, 60, 70) to be decoupled from the securing means (36, 46, 56, 66, 76) to ensure the welding of the timepiece component.

2. Timepiece component according to the preceding claim, **characterized in that** the part (15, 35, 45, 55, 65, 75) includes a strip (37, 47, 57, 67, 77) extending in a closed curve (33, 43, 53, 63, 73), the space delimited by the closed curve (33, 43, 53, 63, 73) receiving the member (27).

3. Timepiece component according to the preceding claim, **characterized in that** the elastic means (30, 40, 50, 60, 70) are formed by the strip (37, 47, 57, 67, 77), the closed curve (33, 43, 53, 63, 73) of which offers elastic deformation areas that come into contact with said substantially vertical surface in order to attach the part (15, 35, 45, 55, 65, 75) onto the member (27).

4. Timepiece component according to claim 2, **characterized in that** the elastic means (30, 40, 50, 60, 70) are formed by bars integral with the strip (37, 47, 57, 67, 77), extending inside said space delimited by the closed curve (33, 43, 53, 63, 73) and offering elastic deformation areas that come into contact with said substantially vertical surface in order to attach the part (15, 35, 45, 55, 65, 75) onto the member (27).

5. Timepiece component according to any of claims 2 to 4, **characterized in that** the securing means (36, 46, 56, 66, 76) are formed by the strip (37, 47, 57, 67, 77), the closed curve (33, 43, 53, 63, 73) of which offers elastic deformation portions that come into contact only with said substantially horizontal surface in order to adapt to its geometry so as to ensure the welding thereof.

6. Timepiece component according to any of claims 2 to 4, **characterized in that** the securing means (36, 46, 56, 66, 76) are formed by branches integral with the strip (37, 47, 57, 67, 77), extending in said space delimited by the closed curve (33, 43, 53, 63, 73) and offering elastic deformation portions that come into contact only with said substantially horizontal surface in order to adapt to its geometry so as to ensure the welding thereof.

7. Timepiece component according to any of claims 2 to 4, **characterized in that** the securing means (36, 46, 56, 66, 76) are formed by branches integral with the strip (37, 47, 57, 67, 77), extending outside the space delimited by the closed curve (33, 43, 53, 63, 73) and offering elastic deformation portions that come into contact only with said substantially horizontal surface in order to adapt to its geometry so as to ensure the welding thereof.

8. Timepiece component according to any of the preceding claims, **characterized in that** the part (15, 35, 45, 55, 65, 75) is made from silicon or from ceramic.

9. Timepiece component according to the preceding claim, **characterized in that** the part (15, 35, 45, 55, 65, 75) also includes at least a partial coating of metal, silicon oxide, silicon nitride, silicon carbide or an allotrope of carbon.

10. Timepiece component according to any of the preceding claims, **characterized in that** the member (27) includes an iron alloy, a copper alloy, nickel or an alloy thereof, titanium or an alloy thereof, gold or an alloy thereof, silver or an alloy thereof, platinum or an alloy thereof, ruthenium or an alloy thereof, rhodium or an alloy thereof, or palladium or an alloy thereof.

11. Timepiece **characterized in that** it includes at least one timepiece component according to any of the preceding claims.
